# EUROPEAN PATENT APPLICATION

(11) **EP 1 710 979 A2**
(43) Date of publication of application: **11.10.2006**
(21) Application number: 06250160.6
(22) Date of filing: 13.01.2006
(51) Int. Cl.: H04L 29/06, H04L 12/28

(54) **Method and apparatus for synchronizing content with a collection of home devices**

(30) Priority: 07.04.2005 US 101964
(71) Applicant: Samsung Electronics Co., Ltd., Suwon-si Gyeonggi-do (KR)
(72) Inventor: Zhu, Victor, Cupertino, California 95014 (US); Messer, Alan, California 95032 (US); Kumar, Praveen, San Jose California 95134 (US)
(74) Representative: Brandon, Paul Laurence

(57) **Abstract**

A synchronization controller (35) in a network (10) of devices (20, 30), provides content synchronization between the available content in the network and the content on another device (25). When the synchronization controller identifies the device for content synchronization with the home network, the synchronization controller attempts to match the device's content with content available in the home network. When there is a mismatch, the content manager (65) starts a content session to transfer content from the device to the home network, or vice versa. During this process, the device need not know which home device it synchronized to, nor does it need to know what kind of format the content is stored in.

## Description

The present invention relates to synchronizing methods for performing content synchronization in a network of devices and to synchronization controllers.

With the proliferation of content bearing devices such as devices in a home network, of synchronizing content on such networks it is becoming increasingly important. A home network typically includes devices such as TVs, DVD players, Camcorders, PCs, appliances, etc.

Conventional approaches for synchronizing content on home networks includes mechanisms and frameworks that utilize fixed configurations. Such fixed configurations are typically between a single device and selected applications. Examples of such configurations include those between an Apple™ iPod™ device and itunes™ application, and Palm/PocketPC™ devices and PC desktop productivity applications.

Features of these conventional frameworks include two-way synchronization between devices and applications, such that changes made on either are reflected to the other upon synchronization. Synchronization can be initiated via user commands, or automatically when an application-host system detects the presence of a device in the network, or vice-versa.

However, a shortcoming of such conventional approaches is that users must set up configurations between fixed devices and application counterparties, resulting in tightly coupled devices and application. Further, in such conventional approaches, synchronized content does not adapt to the capabilities and limitations of the target counterparty.

Preferred embodiments of the present invention aim to provide a method and apparatus that eases the steps which users and software developers must take in order to synchronize content among a collection of devices in a network such as a home network. Preferred embodiments of the present invention aim to allow simplified set up and simplified steps associated with synchronization between devices and applications, and enables synchronization to occur in an intelligent, flexible manner.

In a first aspect, there is provided a synchronization method for performing content synchronization in a network of devices, comprising the steps of:
maintaining a directory of content available on the devices in the network;
establishing communication with another device including content;
using the directory, determining if the meta data of the content in the network matches the metadata of said another device; and
if the metadata of the content in the network does not match the metadata of the content in the said another device, then synchronizing the content in the network and said another device.

In a second aspect, there is provided a synchronization controller that performs content synchronization in a network of devices, comprising:
a directory of content available on the devices in the network;
a communication driver that establishes communication with another device including content;
a content manager that, using the directory, determines if the content in the network matches the content in the said another device, such that if the content in the network does not match the content in said another device, the content manager synchronizes the content in the network and said another device.

Accordingly, in one version the present invention one or more synchronization controllers in the home network, wherein each synchronization controller comprises a media directory that includes a table (directory) of all the content available on the various devices in the home network.

The directory may include identification and location information for each content unit in the network. The identification information can comprise unique identification information for the content unit, such as content title, version number, creation date, etc. The location information can include a unique identification, such as URI for accessing the content unit therein for synchronization.

The synchronization controller may further comprise a content manager and a device communication driver. The device communication driver may provide protocol conversion for communication between an always-on device in the home network and an intermittently connected device. The content manager may perform content synchronization utilizing the media directory and the device communication driver.

In one embodiment, when the content manager identifies an intermittently connected device for content synchronization with the home network and begins the synchronization process, the content manager attempts to match the external device's content with content available in the home network. When there is a mismatch, the content manager may start a synchronization session to transfer content from the intermittently connected device to the home network, or vice versa. During this process, the intermittently connected device need not know which always-on device it synchronized to, nor does it need to know what kind of format the content is stored in.

The device communication driver may provide protocol conversion for inter-network and device communication such as communication between an intermittently connected device and an always-on device in the network. For example, if the home network comprises a 1394 network and the intermittently connected network comprises a non-1394 network, the device communication driver provides protocol conversion for a 1394 device in the home network to communicate with a non-1394 intermittently connected device, to perform content synchronization.

Preferably, the device communication driver includes multiple protocol conversion methods to enable devices in the home to communicate with various intermittently connected devices that use a different communication protocol than the devices in the home network. As such, the device communication driver determines the protocol conversion necessary for communication between an always-on device (e.g., in the home network) and an intermittently connected device, and provides the necessary protocol conversion processing to enable communication between an always-on device and an intermittently connected device. The device communication driver can further facilitate intra-network communication between the devices in the network as necessary.

As such, preferred embodiments of the present invention aim to allow simplified set up and simplified steps associated with synchronization between devices and applications, providing content synchronization in an intelligent, flexible manner.

Further features of the present invention are set out in the appended claims.

The present invention will be apparent from the following description of an embodiment thereof, by way of example only, taken in conjunction with the following drawings.

FIG. 1 is a high level block diagram of an exemplary network in which a content synchronization method according to an embodiment of the present invention is implemented.

FIG. 2 shows a high level block diagram of another exemplary network in which a content synchronization system according to the present invention is implemented.

FIG. 3 is a high level functional block diagram of an example synchronization controller according to the present invention.

FIG. 4 is more detailed functional block diagram of the example synchronization controller of FIG. 3.

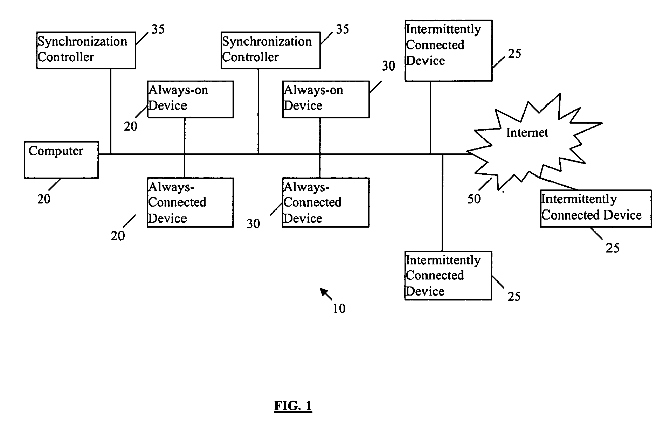

**FIG. 1** shows an example functional architecture of a network 10, such as a home network, that implements a method and system for synchronizing content with a collection of home devices, according to an embodiment of the present invention. The network 10 comprises always-on (always-connected) devices 20, one or more synchronization controllers 35, to intermittently connected devices 25 that are connected to the network 10 intermittently, and the Internet 50.

Further, one or more synchronization controllers 35 can be logical devices and may be included in the client and/or server devices 20.

In this example, the devices 20 and 35 implement the HTTP protocol for communication and protocol therebetween. Though in the example described herein the HTTP protocol is utilized by the network 10, those skilled in the art will recognize that preferred embodiments of the present invention can be useful with other network communication protocols that utilize the client-server model.

The synchronization controller 35 in network 10 simplifies the steps which users and software developers must take in order to synchronize content among the collection of devices in the network 10. Preferred embodiments of the present invention aim to provide simplified set up and simplified steps associated with synchronization between devices and applications. Preferred embodiments of the present invention further aim to enable synchronization to occur in an intelligent, flexible manner.

Accordingly, applications and devices in the network 10 can automatically synchronize with content located on other, multiple, arbitrary applications and devices, rather than with content located within a fixed, preconfigured counterparty. Further, synchronization can occur in a manner which takes into account the capabilities of the counterparties, and the preferences of the user. For example, the process of synchronizing video content between two devices that support different video formats would include a step which transcodes the video from the source device's format to that of the destination device.

In one embodiment the present invention enables devices 25 intermittently connected (foreign) to the home network 10, to synchronize content with the home network 10 without the knowledge of which device 20 are connected in the home network 10. Unlike conventional approaches where an external device may not be able to synchronize to devices that do not employ the same protocols as the intermittently connected device, the present embodiment assures compatibility because a home network 10 according to the present embodiment is capable of multiple content access protocols.

In another embodiment the present invention provides a method of bridging the difference between an intermittently connected device 25 and a target device 20 in the home network 10 with respect to content access protocols and content capabilities, and triggering the network 10 to perform certain synchronization actions. For example, when the network synchronizes a PDA's calendar to a desktop PC and finds that there is a meeting at 8:00 am the next day, the network synchronizes the alarm clock about this as well such that an alarm could be set at 7:00 am on the alarm clock.

Accordingly, in one embodiment the network includes one or more synchronization controllers 35, wherein each synchronization controller 35 hides device details from devices 20 in the network 10 and from devices 25. Each synchronization controller 35 implements a mapping method that maps a synchronization request to operations to devices 20, 30 within the network 10. This mapping method describes how, when, what needs to be synchronized between the intermittently connected device and the content in the network.

In one example, the mapping method includes meta data descriptions (e.g., content title, content creation date, content format, content location, etc.) of every piece of content and device in each synchronization controller 35, such that each synchronization controller 35 can choose the right content and device to synchronize without requiring manual operation by the user. Although there can be multiple controllers in the network, in this embodiment the synchronization process between the intermittently connected device and the network is by one controller only, and only when the controller fails, the process fails over to another controller.

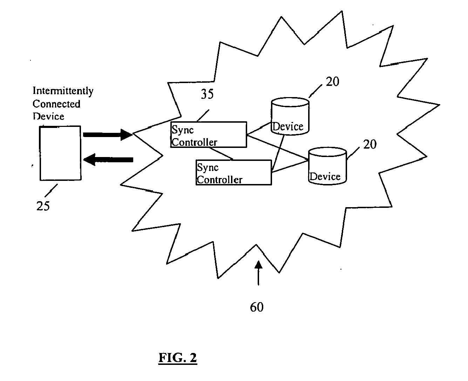

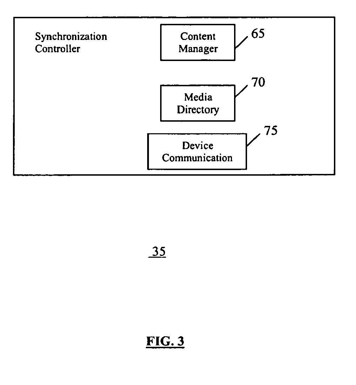

**FIG. 2** shows a high level block diagram of another exemplary network 60 in which content synchronization according to an embodiment of the present invention is implemented. An intermittently connected device 25 which desires to synchronize with a collection of home devices 20, interacts with one of the synchronization controllers 35 which manage the synchronization. **FIG. 3** is a high level block diagram of the design of an example synchronization controller 35, according to an embodiment of the present invention, comprising a content manager 65, a media directory 70 and a device communication block 75.

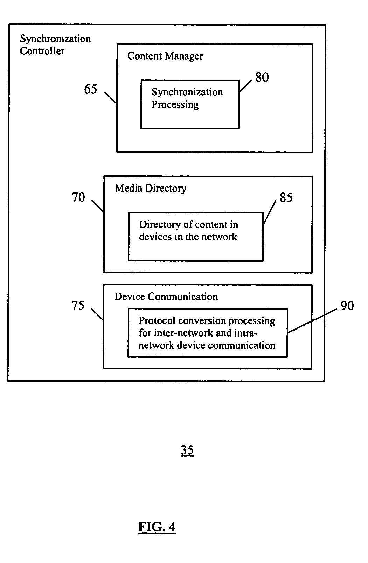

**FIG. 4** shows a more detailed function block diagram of the example synchronization controller 35 of FIG. 3. In the example of FIG. 4, the media directory 70 includes a table/directory 85 of all the content available on the various devices in the home network 60. The directory 85 includes identification and location information for each content unit (e.g., music, video, phone book, etc.) in the network. There can be multiple ways to create a media directory, and one method is to let the controller advertise itself. As the network driving controller starts up, the device 20 sends its content to the controller with a response message. Another way is to let the device 20 advertise its content during its startup time, and media directory updates its table when receiving such messages.

The identification information can comprise meta data, unique identification information such as content name, date of last update, size, etc. The location information can be a unique identification, such as URI for accessing the content unit therein for synchronization.

The content manager 65 includes synchronization processing 80 that is responsible for content synchronization. When the content manager 65 identifies an intermittently connected device for content synchronization with the home network 60 and begins the synchronization processing 80, the content manager 65 attempts to match the content in the device 25 with content available in the home network 60.

If there is a mismatch, the content manager 65 transfers content from the external device 35 to the home network 10, vice versa, or both. Because the media directory 85 contains most updates, the media directory 85 has the information regarding content in the network. The media directory is also updated to indicate the content in the network that was synchronized in the network. When a content is synchronized, the information in the media directory 85 is also updated.

In one example, the content manager 65 performs content matching by comparing date and size of an identified content unit in the home network 60 with the date and size of a corresponding identified content unit in the external device 25. When there is a mismatch, the content manager 65 starts a synchronization session to transfer content from the external device 25 to the home network 60, or vice versa.

During the synchronization process, the intermittently connected device 25 need not know to which home device 20 the intermittently connected device is synchronized to (transparent to the intermittently connected device), nor does the intermittently connected device 25 need to know what kind of format the content is stored in (transparent to the intermittently connected device). The meta data of the content and of the home network devices 20, which the content manager 65 uses to make decisions, is managed by the media directory 85 and the device communication driver 75, respectively.

The device communication driver 75 provides protocol conversion for inter-network protocol and device communication such as communication between an intermittently connected device 25 and a device 20 and/or 35 in the network 60. For example, the home network 60 can comprise a 1394 network and the external device 25 can comprise a non-1394 device on a non-1394 network, wherein the device communication driver 75 provides protocol conversion for a 1394 device in the home network to communicate with a non-1394 external device 25, to perform content synchronization.

Preferably, the device communication driver 75 includes multiple protocol conversion methods 90 to enable devices in the network 60 to communicate with various devices 25 that use a different communication protocol than the devices in the home network 60. As such, the device communication driver 75 determines the protocol conversion necessary for communication between a device 20 in the home network 60 and an intermittently connected device 25, and provides the necessary protocol conversion processing to enable communication between a device 20 in the network 60 and an intermittently connected device 25.

The device communication driver 75 can further facilitate intra-network communication between the devices in the network 60 as necessary. As such, the content manager 65 can also provide content synchronization between the devices in the home network 60 in a similar manner as discussed above for an intermittently connected device. Although this embodiment describes content synchronization among always-on devices and intermittently connected devices, the same method and apparatus can be used for synchronization among always-on devices within the network. Further, the content manager 65 allows a user to select the content unit that is to be synchronized and portions of that content unit that the user wants the content manager to synchronize thereafter. Further, the media directory 70 can store such selection information to be used by the content manager 65 when synchronizing each content unit.

While this invention is susceptible of embodiments in many different forms, there are shown in the drawings and will herein be described in detail, preferred embodiments of the invention with the understanding that the present disclosure is to be considered as an exemplification of the principles of the invention and is not intended to limit the broad aspects of the invention to the embodiments illustrated. The aforementioned example architectures above according to the present invention, can be implemented in many ways, such as program instructions for execution by a processor, as logic circuits, as ASIC, as firmware, etc., as is known to those skilled in the art. Therefore, the present invention is not limited to the example embodiments described herein.

The present invention has been described in considerable detail with reference to certain preferred versions thereof; however, other versions are possible. Therefore, the spirit and scope of the appended claims should not be limited to the description of the preferred versions contained herein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A synchronization method for performing content synchronization in a network of devices, comprising the steps of:
maintaining a directory of content available on the devices in the network;
establishing communication with another device including content;
using the directory, determining if the meta data of the content in the network matches the metadata of said another device; and
if the metadata of the content in the network does not match the metadata of the content in the said another device, then synchronizing the content in the network and said another device.

2. The method of claim 1, wherein the step of maintaining the directory further includes the steps of discovering information about the content available in the devices in the network, and storing that discovered information in the directory.

3. The method of claim 1 or claim 2, wherein:
the content in the network comprises content units, each content unit being stored in a device in the network, and
the directory comprises multiple entries, each entry including identification and device location information for a content unit in the network.

4. The method of claim 3, wherein the step of synchronizing further includes the steps of synchronizing the content in said another device with the content in the network based on the content identification information in the directory.

5. The method of claim 3, wherein the step of synchronizing further includes the steps of synchronizing the content in said another device with the content in the network based on the content location information in the directory.

6. The method of any preceding claim, wherein during synchronization, the identity of a device in the network which stores the content being synchronized, is transparent to said another device.

7. The method of any preceding claim, wherein during synchronization, the format of the content being synchronized is transparent to said another device.

8. The method of any preceding claim, wherein the step of establishing communication further includes the steps of performing protocol conversion to facilitate communication between a device in the network and said another device.

9. The method of any preceding claim, wherein the step of synchronizing further includes the steps of updating the content in said another device with the content from the network.

10. The method of any preceding claim, wherein the step of synchronizing further includes the steps of updating the content in the network with the content from said another device.

11. The method of any preceding claim, wherein the step of synchronizing further includes the steps of updating the directory in the network with synchronized information.

12. The method of any preceding claim, wherein said network comprises a network of always-connected device, and said another device comprises an intermittently connected device.

13. The method of any preceding claim, wherein the step of synchronizing further includes the steps of synchronizing by transcoding content between the network and said another device.

14. A synchronization controller (35) that performs content synchronization in a network (10) of devices (20, 30), comprising:
a directory (70) of content available on the devices in the network;
a communication driver (75) that establishes communication with another device (25) including content;
a content manager (65) that, using the directory, determines if the content in the network matches the content in the said another device, such that if the content in the network does not match the content in said another device, the content manager synchronizes the content in the network and said another device.

15. The controller (35) of claim 14, wherein the directory (70) includes synchronization information about the content available in the devices (20, 30) in the network (10).

16. The controller (35) of claim 14 or claim 15, wherein:
the content in the network (10) comprises content units, each content unit being stored in a device (20, 30) in the network, and
the directory (70) comprises multiple entries, each entry including identification and device location information for a content unit in the network.

17. The controller (35) of claim 16, wherein the content manager (65) further synchronizes the content in said another device (25) with the content in the network (10) based on the content identification information in the directory.

18. The controller (35) of claim 16, wherein the content manager (65) further synchronizes the content in said another device (25) with the content in the network (10) based on the content location information in the directory

19. The controller (35) of any one of claims 14-18, wherein during synchronization, the identity of a device (20, 30) in the network (10) which stores the content being synchronized, is transparent to said another device (25).

20. The controller (35) of any one of claims 14-19, wherein during synchronization, the format of the content being synchronized is transparent to said another device (25) .

21. The controller (35) of any one of claims 14-20, wherein the communication driver establishes communication by performing protocol conversion to facilitate communication between the network (10) and said another device (25).

22. The controller (35) of any one of claims 14-21, wherein the content manger (65) synchronizes by transferring content from the network (10) to the said another device (25).

23. The controller (35) of any one of claims 14-22, wherein the content manager (65) synchronizes by transferring content from said another device (25) to the network (10).

24. The controller (35) of any one of claims 14-23, wherein the content manager (65) further updates the directory with synchronized information.

25. The controller (35) of claim 14, wherein the content manager (65) further synchronizes by transcoding content between the network (10) and said another device (25) .

26. The controller of any one of claims 14-25 wherein said network comprises a network of always-connected devices (20, 30), and said another device comprises an intermittently connected device (25).
